Europäisches Patentamt

European Patent Office

Office européen des brevets

(19)

(11) Veröffentlichungsnummer: **0 296 306 B1**

(12) **EUROPÄISCHE PATENTSCHRIFT**

(45) Veröffentlichungstag der Patentschrift: **25.09.91**

(51) Int. Cl.⁵: **B62J 6/00**

(21) Anmeldenummer: **88101206.6**

(22) Anmeldetag: **28.01.88**

(54) **Beleuchtungsanlage für/an Zweiräder.**

(30) Priorität: **25.06.87 PCT/EP87/00339**

(43) Veröffentlichungstag der Anmeldung:
**28.12.88 Patentblatt 88/52**

(45) Bekanntmachung des Hinweises auf die
Patenterteilung:
**25.09.91 Patentblatt 91/39**

(84) Benannte Vertragsstaaten:
**AT BE CH DE ES FR GB GR IT LI LU NL SE**

(56) Entgegenhaltungen:
**DE-C- 331 270
DE-C- 640 538
GB-A- 153 148**

(73) Patentinhaber: **Schürmann, Dieter
Lessing Strasse 2
4800 Bielefeld 1(DE)**

Patentinhaber: **Gudereit, Bernd
Hörster Strasse 30
4800 Bielefeld 18(DE)**

(72) Erfinder: **Schürmann, Dieter
Lessing Strasse 2
4800 Bielefeld 1(DE)**
Erfinder: **Gudereit, Bernd
Hörster Strasse 30
4800 Bielefeld 18(DE)**

(74) Vertreter: **Hanewinkel, Lorenz, Dipl.-Phys.
Patentanwalt Ferrariweg 17a
W-4790 Paderborn(DE)**

## Beschreibung

Die Erfindung bezieht sich auf eine Beleuchtungsanlage für/an Zweiräder, mit einer auf einer Radachse festlegbaren Halterung, an der eine exzentrisch zur Radachse angeordnete Lichtmaschine gelagert ist, die von einem vom Rad verdrehbaren Antriebsteil über ein Getriebe antreibbar ist und wie im ersten Teil des Patentanspruches 1 definiert ist.

Eine derartig aufgebaute Beleuchtungsanlage ist aus der DE-C-640 538 bekannt geworden.

Eine ähnliche Beleuchtungsanlage ist aus der GB-A-153 148 bekannt.

Aus der CH-PS-224 818 und DE-PS 749 209 sind Beleuchtungsanlagen bekannt, bei denen als Getriebe Zahnräder bzw. Reibräder eingesetzt sind, durch die die gesamte Beleuchtungsanlage verhältnismäßig großvolumig ausgeführt ist und bei der Befestigung auf der Fahrradachse besondere Vorkehrungen getroffen werden.

Weiterhin haben die Zahnradgetriebe ein starkes Laufgeräusch und sie sind gegen Verschmutzungen nicht ausreichend gesichert, so daß sie hierdurch in ihrer Funktion stark beeinträchtigt werden.

Aufgabe der Erfindung ist es, eine nach der eingangs genannten Art aufgebaute Beleuchtungsanlage in einer vorzugweise flachen Bauweise auszuführen, mit einem einen geräuscharmen Lauf ergebenden schlupffreien Getriebe auszustatten und sie in einfacher Weise sowohl an der linken als auch an der rechten Radseite auf der Achse festlegen zu können.

Diese Aufgabe wird erfindungsgemäß durch die kennzeichnenden Merkmale des Patentanspruches 1 gelöst, wobei noch die in den Unteransprüchen aufgeführten Gestaltungsmerkmale vorteilhafte Weiterbildungen der Aufgabenlösung darstellen.

Der Gegenstand der Erfindung erstreckt sich nicht nur auf die Merkmale der einzelnen Ansprüche, sondern auch auf deren Kombination.

Die Vorteile der erfindungsgemäßen Beleuchtungsanlage sind:

1. Als Getriebe zum Antrieb der Lichtmaschine kann ein ein- oder zweistufiger Umschlingungstrieb vorgesehen, der einen schlupffreien und geräuscharmen Lauf beim Antrieb der Lichtmaschine durch das rotierende Rad des Fahrrades ermöglicht,

2. der Umschlingungstrieb kann mit einem oder zwei Zahnriemen arbeiten, die den schlupffreien und geräuscharmen Lauf gewährleisten,

3. die Beleuchtungsanlage hat eine tellerförmige, auf der Radachse festlegbare Aufnahmescheibe, eine darum vorzugsweise unter Zwischenschaltung eines Kugellagers drehbar gelagerte Mitnehmerscheibe mit Antriebsrad und einen daran angeordneten ein - und ausschaltbaren Kupplungsorgan, z.B. Ein- und Ausschalthebel, der eine lösbare Verbindung zu den Speichen herstellt, wobei die Aufnahmescheibe, die vorzugsweise ringförmige Mitnehmerscheibe und der Ein- und Ausschalthebel vorzugsweise parallel zu der Speichenneigung sich erstrecken, was eine äußerst flache Ausführung im Bereich um die Radachse ergibt,

4. die Lichtmaschine ist in einem Gehäuse angeordnet, welches auch den Umschlingungstrieb aufnimmt, und dieses Gehäuse kann einen günstigen Abstand zur Radachse haben und der gesamten Beleuchtungsanlage eine langgestreckte, flache, aerodynamische Bauform, geben.

5. die Beleuchtungsanlage ist vorzugsweise aufgrund ihrer Ausführungen sowohl an der linken als auch an der rechten Seite des Vorderrades an allen Radtypen (Renn- und Tourenrädern) anbringbar und nachrüstbar und es ist keine Veränderung der Gabel oder Veränderung der Schutzblechbefestigung erforderlich bzw. zeigt die Aufnahmescheibe noch Aussparungen, durch die eine Montage für die Schutzblechhalterungsstangen-Schrauben einfach möglich ist,

6. die Beleuchtungsanlage kann eine verkapselte Ausführung zergen, so daß keine äußeren Einflüsse durch Schmutz, Regen, Schnee od. dgl. den Umschlingungstrieb beeinflussen können und dadurch eine sichere Funktion gewährleistet ist,

7. beim Links- oder Rechtseinsatz der Beleuchtungsanlage treten keine Schwierigkeiten bei der Handhabung auf, da lediglich der Ein- und Ausschalthebel für die Funktionsstellung und Nichtfunktionsstellung verschwenkt werden muß,

8. die Beleuchtungsanlage kann einen Leichtlauf-Sicherheits-Zweiraddynamo dar stellen, der bei einfachem Aufbau, kostengünstiger Herstellung und leichter Montage einen hohen Wirkungsgrad und gesteigerten Benutzungswert hat.

Auf den Zeichnungen sind Ausführungsbeispiele gemäß der Erfindung dargestellt, welche nachfolgend näher erläutert werden. Es zeigen:

Fig. 1 eine Seitenansicht einer Beleuchtungsanlage für/an Zweiräder,

Fig. 2 eine Schnitt durch dieselbe Beleuchtungsanlage gemäß Schnittlinie I-I in Fig. 1,

Fig. 3 eine Voreransicht einer zweistufigen Beleuchtungsanlage,

Fig. 4 einen Schnitt durch die zweistufige Beleuchtungsanlage gemäß Schnittlinie II-II in Fig. 3.

Die Beleuchtungsanlage für/an Zweiräder, insbesondere Fahrräder, weist eine auf einer Radachse (1) des Zweirades festlegbare Halterung (2) auf, an der eine exzentrisch zur Radachse (1) angeordnete Lichtmaschine (Wechselstromgenerator) (3) gelagert ist. Diese Lichtmaschine (3) wird von einem vom Rad des Zweirades verdrehbaren Antriebsteil (4) über ein Getriebe angetrieben, wobei das Getriebe von einem Umschlingungstrieb (5/6) gebildet ist.

Die Halterung (2) ist von einer tellerförmigen Aufnahmescheibe gebildet, um die als Antriebsteil eine Mitnehmerscheibe (4) unter Zwischenschaltung eines Kugellagers (7) drehbar gelagert ist.

Diese Mitnehmerscheibe (4) ist als Ring ausgebildet und zeigt ein bewegungsstarres Antriebsrad (8) sowie einen mit den Radspeichen (9) kraftschlüssig verbindbaren Ein- und Ausschalthebel (10).

Der Tellerrand (2a) der Aufnahmescheibe (2), die Mitnehmerscheibe (4) und der Ein- und Ausschalthebel (10) verlaufen parallel zur Speichenneigung.

An der Aufnahmescheibe (2) ist ein quer zur Radachse (1) und in Radebene sich erstreckendes Gehäuse (11) vorgesehen, in dem die exzentrisch zur Radachse (1) angeordnete Lichtmaschine (3) und der Umschlingungstrieb (5/6) untergebracht sind.

Um den Tellerrand (2a) der Aufnahmescheibe (2) ist ein ein Teil des Gehäuses (11) bildender Gehäusering (12) und ein Feststellring (13) befestigt und innerhalb dieser beiden Ringe (12, 13) liegt das Kugellager (7), das Antriebsrad (8) und ein Zahnriemen (14) des Umschlingungstriebes (5/6), so daß diese beiden Ringe (12, 13) einen hohlen Gehäusering ergeben, der im Bereich des Zahnriemens (14) in das Gehäuse (11) übergeht.

Das Gehäuse (11) ist mit einem Verschlußdeckel (11a) zum Zugang in das Gehäuse (11) ausgestattet und weist ein Kabelanschlußteil (15) für die elektrischen Kabel (16) in Form eines Klemmhebels od. dgl. auf.

Der Gehäusering (12) und Stellring (13) gehen über ein Gehäuseverbindungsstück (17) in das Gehäuse (11) über und der Gehäusering (12) mit Verbindungsstück (17) und Gehäuse (11) haben eine langgestreckte ovale Grundform.

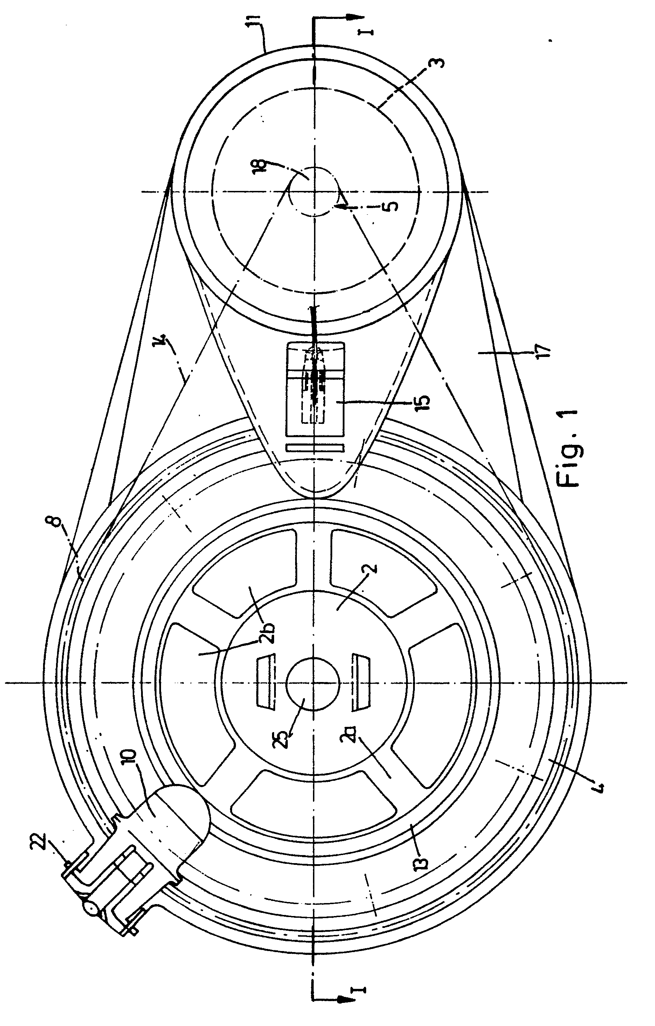

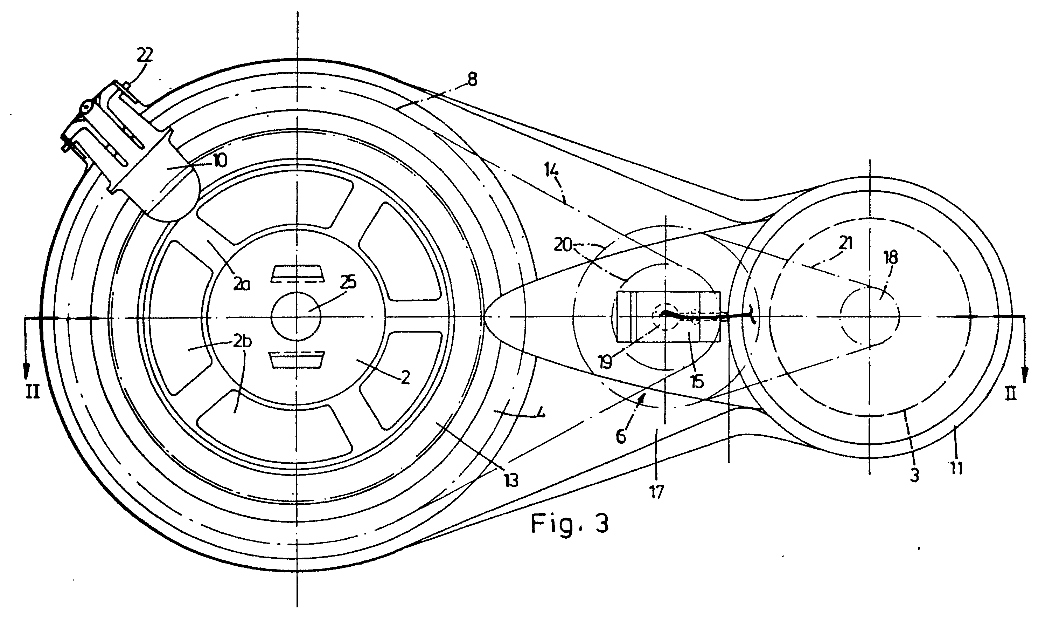

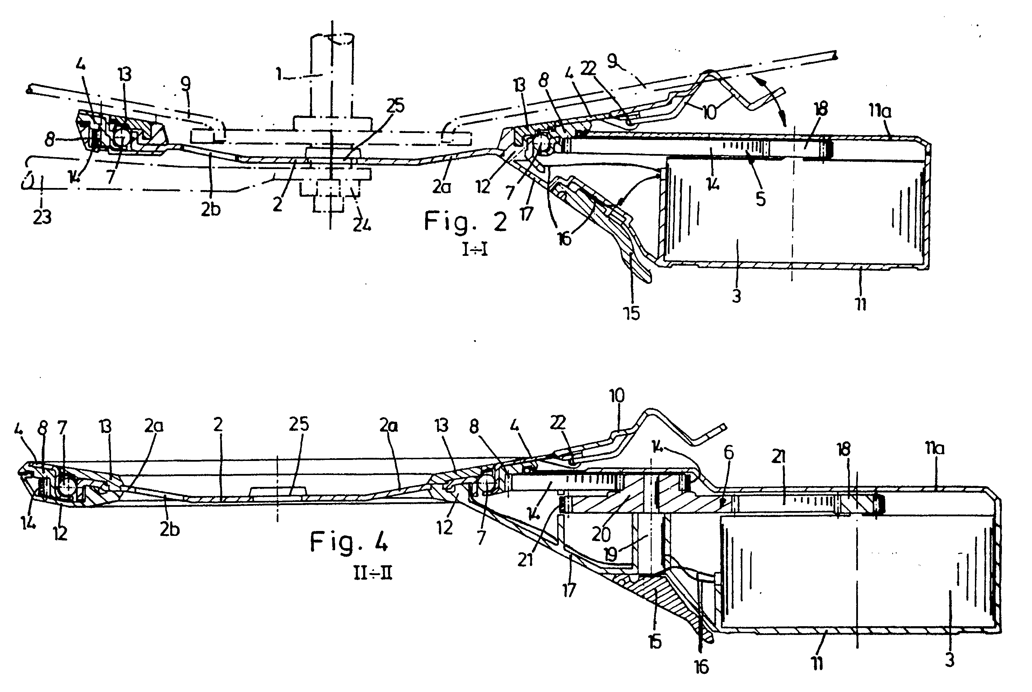

Bei der Beleuchtungsanlage nach Fig. 1 und 2 hat der Umschlingungstrieb (5) eine einstufige Übersetzung und sein Zahnriemen (14) läuft um das Antriebsrad (8) sowie ein Antriebsritzel (18) der Lichtmaschine (3) um.

Gemäß der zweiten Ausführung der Beleuchtungsanlage nach Fig. 3 und 4 hat der Umschlingungstrieb (6) zwei Übersetzungsstufen. Dabei ist in dem Gehäuseverbindungsstück (17) um eine Achse (19) ein zweistufiges Zwischenrad (20) drehbar gelagert, wobei der Zahnriemen (14) um das Antriebsrad (8) und die erste Stufe des Zwischenrades (20) und ein zweiter Zahnriemen (21) um die zweite Stufe des Zwischenrades (20) und das Antriebsritzel (18) der Lichtmaschine (3) umläuft.

Der Ein- und Ausschalthebel (10) ist von einem an der Mitnehmerscheibe (4) um eine quer zur Radachse (1) stehende Achse (22) in zwei Endstellungen bewegbaren Rasthebel gebildet.

Der Achsabstand zwischen Radachse (1) bzw. Antriebsrad (8) und Lichtmaschinen-Antriebsritzel (18) ist derart groß ausgeführt, daß die untere Schutzblechhalterungsstange nicht verbogen oder verlängert werden muß und die Befestigungsschrauben der Schutzblechhalterungsstange in Aussparungen (2b) der Aufnahmescheibe (2) aufgenommen werden können bzw. eine Montage der Schrauben durch diese Aussparungen (2b) gut möglich ist.

Die gesamte Beleuchtungsanlage ist als flache, langgestreckte, aerodynamische Baueinheit aus Metall- und Kunststoffteilen ausgeführt und kann sowohl links als auch rechts auf der Radachse (1) festgelegt werden.

Die Beleuchtungsanlage wird mit ihrer zentrischen Lagerstelle (25) der Aufnahmescheibe (2) auf die Radachse (1) aufgesteckt und durch die gleichzeitig die Vorderradgabel (23) haltende Mutter (24) auf der Radachse (1) verdrehfest festgelegt, wobei dann der Gehäusering (12, 13) zwischen Gabel (23) und Speichen (9) sich erstreckt.

Durch Bewegen des Ein- und Ausschalthebels (10) in Richtung Speichen (9) rastet dieser zwischen zwei benachbarten Speichen (9) ein und es ist eine kraftschlüssige Verbindung zwischen dem rotierenden Rad und dem Ein- und Ausschalthebel (10) hergestellt, so daß durch das sich drehende Rad über den Hebel (10) die Mitnehmerscheibe (4) und somit das Antriebsrad (8) verdreht werden. Hierdurch erfolgt bei dem einstufigen Umschlingungstrieb (5) über den Zahnriemen (14) und das Ritzel (18) der Antrieb der Lichtmaschine (3) und bei dem zweistufigen Umschlingungstrieb (6) über den Zahnriemen (14), das Zwischenrad (20), den zweiten Zahnriemen (21) und das Ritzel (18) der Antrieb der Lichtmaschine (3) zur Stromerzeugung.

Der Rasthebel (10) ist von einem federnden Blechteil gebildet, das nur zwei Stellungen, nämlich die Einschaltstellung zwischen den Speichen (9) und die Ausschaltstellung außerhalb der Speichen (9) zuläßt.

Dieser Hebel (10) ist dabei so angeordnet und ausgebildet, daß er nur im Stillstand des Rades zwischen die Speichen (9) eingelegt und aus denselben herausgeschwenkt werden kann, wodurch die Verletzungsgefahr für die Finger und Füße vermieden wird.

Der Umschlingungstrieb (5/6) besitzt in bevorzugter Weise einen oder zwei Zahnriemen (14) bzw. (14 und 21) und gezahnte Antriebsräder (8, 20, 18). Der Umschlingungstrieb (5/6) kann jedoch auch mit ungezahnten Riemen, mit Ketten od. dgl. arbeiten.

Die Mitnehmerscheibe (4), die Aufnahmescheibe (2) und das Kugellager (7) bestehen aus Metall und das Gehäuse (11, 11a), das Gehäuseverbindungsstück (17), der Gehäusering (12), der Feststellring (13), der bzw. die Zahnriemen (14, 21) und die Antriebsräder (8, 20, 18) bestehen aus Kunststoff.

In das Gehäuse (11) läßt sich ein digitaler Kilometerzähler und/oder ein aufklappbarer Stromspeicher integrieren.

Die miteinander verbundenen Einzelteile (2, 4, 12, 8, 11) sind durch Labyrinthdichtungen spritzwassergeschützt miteinander verbunden, so daß die sich in der Beleuchtungsanlage bewegenden Teile verkapselt untergebracht sind.

Fig. 1 und 3 zeigen den Hebel (10) in der ausgeschalteten und Fig. 2 und 4 in der eingeschalteten Stellung.

Der einstufige Umschlingungstrieb (5) hat ein Übersetzungsverhältnis von 9 : 1.

Bei zweistufigem Umschlingungstrieb (6) ist das Übersetzungsverhältnis in der esten Stufe (Antriebsrad (8), Zahnriemen (14) und kleines Rad des Zwischenrades (20)) 6,43 : 1 und in der zweiten Stufe (großes Rad des Zwischenrades (20), Zahnriemen (21) und Antriebstritzel (18)) 3,4 : 1.

## Patentansprüche

1. Beleuchtungsanlage für/an Zweiräder, mit einer auf einer Radachse unverdrehbar festlegbaren Halterung, an der ein vom Zweirad-Rad mittels eines in die Radspeichen ein- und ausschaltbaren Kupplungsorganes verdrehbares Antriebsrad gelagert ist, welches über einen Umschlingungstrieb ein Antriebsrad der im Abstand zur Radachse angeordneten an der Halterung gelagerten Lichtmaschine antreibt, dadurch gekennzeichnet, daß die Halterung von einer auf der Radachse (1) sitzenden, tellerförmigen, das Antriebsrad (8) mit dem Kupplungsorgan (10) drehbar lagernden Aufnahmescheibe (2) und einem sich daran quer zur Radachse (1) anschließenden, die Lichtmaschine (3) aufnehmenden Gehäuse (11) gebildet ist und in der Aufnahmescheibe (2) und in dem Gehäuse (11) der von mindestens einem Zahnriemen gebildete Umschlingungstrieb (5/6) verläuft.

2. Beleuchtungsanlage nach Anspruch 1, dadurch gekennzeichnet, daß um die tellerförmige Aufnahmescheibe (2) eine Mitnehmerscheibe (4) unter Zwischenschaltung eines Kugellagers (7) drehbar gelagert ist, an der das Antriebsrad (8) des Umschlingungstriebes (5/6) bewegungsstarr angeordnet und das mit den Radspeichen (9) kraftschlüssig verbindbare von einem, Ein- und Ausschalthebel (10) gebildete Kupplungsorgan festgelegt sind.

3. Beleuchtungsanlage nach den Ansprüchen 1 und 2, dadurch gekennzeichnet, daß der Tellerrand (2a) der Aufnahmescheibe (2), die Mitnehmerscheibe (4) und der Ein- und Ausschalthebel (10) parallel zur Speichenneigung verlaufend ausgebildet und angeornded sind.

4. Beleuchtungsanlage nach den Ansprüchen 1 bis 3, dadurch gekennzeichnet, daß der Umschlingungstrieb (5) eine einstufige Übersetzung hat und einen um das Antriebsrad (8) sowie ein Antriebsritzel (18) der Lichtmaschine (3) umlaufenden Zahnriemen (14) besitzt (Fig. 1 und 2).

5. Beleuchtungsanlage nach den Ansprüchen 1 bis 3, dadurch gekennzeichnet, daß der Umschlingungstrieb (6) zwei Übersetzungsstufen hat und dabei zwei Zahnriemen (14, 21) und ein um eine Achse (19) im Gehäuse (11) drehbar gelagertes, zweistufiges Zwischenrad (20) aufweist, wobei der erste Zahnriemen (14) um das Antriebsrad (8) und die erste Stufe des Zwischenrades (20) und der zweite Zahnriemen (21) um die zweite Stufe des Zwischenrades (20) und ein Antriebsritzel (18) der Lichtmaschine (3) umläuft (Fig. 3 und 4).

6. Beleuchtungsanlage nach den Ansprüchen 1 bis 5, dadurch gekennzeichnet, daß um den Tellerrand (2a) der Aufnahmescheibe (2) ein ein Teil des Gehäuses (11) bildender Gehäusering (12) und ein Feststellring (13) befestigt sind, die über ein Gehäuseverbindungsstück (17) in das Gehäuse (11) übergehen und in ihrem Hohlraum das Kugellager (7), das Antriebsrad (8) und einen Teil des Zahnriemens (14) aufnehmen.

7. Beleuchtungsanlage nach den Ansprüchen 1 bis 6, dadurch gekennzeichnet, daß das Gehäuse (11) einen Verschlußdeckel (11a) und ein Kabelanschlußteil (15) hat.

8. Beleuchtungsanlage nach den Ansprüchen 1 bis 7, dadurch gekennzeichnet, daß der Ein- und Ausschalthebel (10) von einem an der ringförmigen Mitnehmerscheibe (4) um eine quer zur Radachse (1) stehende Achse (22) in zwei Endstellungen bewegbaren, federnden Rasthebel gebildet ist.

9. Beleuchtungsanlage nach den Ansprüchen 1 bis 8, dadurch gekennzeichnet, daß der Achsabstand zwischen Radachse (1) bzw. Antriebsrad (8) und Lichtmaschinen-Antriebsritzel (18) derart groß ist, daß die untere Schutzblechhalterungsstange nicht verbogen oder verlängert werden muß und die Befestigungsschrauben der Schutzblechhalterungsstange in Aussparungen (2b) der Aufnahmescheibe (2) aufgenommen werden.

10. Beleuchtungsanlage nach den Ansprüchen 1 bis 9, dadurch gekennzeichnet, daß dieselbe als flache, langgestreckte, aerodynamische, links und rechts auf der Radachse (1) festlegbare Baueinheit aus Metall- und Kunststoffteilen ausgebildet ist.

11. Beleuchtungsanlage nach den Ansprüchen 1 bis 10, dadurch gekennzeichnet, daß in das Gehäuse (11) ein digitaler Kilometerzähler und/oder ein aufladbarer Stromspeicher integriert sind.

**Claims**

1. Lighting system for/on two-wheeled vehicles, with a non-pivoting mounting which can be fixed to one wheel axle, and on this mounting an adjustable drive wheel is bearing-mounted which can be turned by the wheel of the two-wheeled vehicle by means of a coupling unit which can be connected into, and disconnected from, the spokes, and this drive wheel, via a belt contact drive unit, drives a drive wheel of the light machine bearing-mounted on the mounting at a distance from the wheel axle, characterised by the fact that the mounting is formed of a dish-shaped holding disc (2) which sits on the wheel axle (1) and holds the drive wheel (8) with the coupling unit (10) in a swivel mount and of a connected housing at an angle to the wheel axle (1) and accommodating the light machine (3) and the belt contact drive unit (5/6), formed of at least one toothed belt, runs in a housing (11).

2. Lighting system as per claim 1, characterised by the fact that a driving disc (4) is swivel mounted around the dish-shaped holding disc (2), by means of an intermediate ball bearing (7), on which the drive wheel (8) of the belt contact drive (5/6) is rigidly fixed and the coupling unit, with a non-positive connection to the spokes (9) and formed of an on and off lever (10), are fixed.

3. Lighting system as per claims 1 and 2, characterised by the fact that the edge of the dish (2a) of the holding disc (2), the driving disc (4) and the on and off lever (10) are designed and arranged to run parallel with the angle of the spokes.

4. Lighting system as per claims 1 to 3, characterised by the fact that the belt contact drive (5) has a single-stage transmission and a toothed belt (14) running round the drive wheel (8) and a drive pinion (18) of the light machine (3) (Figs. 1 and 2).

5. Lighting system as per claims 1 to 3, characterised by the fact that the belt contact drive (6) has two transmission stages and thus displays two toothed belts (14, 21) and a two-stage intermediate wheel (20) swivel-mounted around an axis (19) in the housing (11), whereby the first toothed belt (14) runs round the drive wheel (8) and the first stage of the intermediate wheel (20) and the second toothed belt (21) around the second stage of the intermediate wheel (20) and a drive pinion (18) of the light machine (3) (Figs. 3 and 4).

6. Lighting system as per claims 1 to 5, characterised by the fact that a housing ring (12) forming part of the housing (11) and a fixing ring (13) are fixed around the edge of the dish (2a) of the holding disc (2), and these rings lead via a housing connection piece (17) to the housing (11) and accommodate the ball bearing (7), the drive wheel (8) and part of the toothed belt (14) in their cavity.

7. Lighting system as per claims 1 to 6, characterised by the fact that the housing (11) has a cover (11a) and a cable connection part (15).

8. Lighting system as per claims 1 to 7, characterised by the fact that the on and off lever (10) is formed of a spring-loaded stop lever moving on the circular holding disc (4) and in two end positions around an axle (22) at an angle to the wheel axle (1).

9. Lighting system as per claims 1 to 8, characterised by the fact that the interval between the wheel axle (1) and the drive wheel (8) and the light machine drive pinion (18) is such that the bottom protective plate mounting rod does not need to be curved or extended and the fixing screws of the protective plate mounting rod are accommodated in sockets (2b) in the holding disc (2).

10. Lighting system as per claims 1 to 9, characterised by the fact that it is formed of a flat, elongated, aerodynamic, component, which can be fitted left or right of the wheel axle (1) and is made of metal and plastic parts.

**11.** Lighting system as per claims 1 to 10, characterised by the fact that a digital mileometer and/or a rechargeable power store are integrated into the housing (11).

**Revendications**

**1.** Installation d'éclairage pour véhicules à deux roues, avec un support pouvant être fixé, ingauchissable, sur l'axe d'une roue, support sur lequel un pignon de commande est monté, lequel peut être tourné à l'aide d'un organe de couplage, mis en marche ou arrêté dans les rayons de la roue, ce pignon de commande entraînant, par l'intermédiaire d'un entraînement en boucle, le pignon de commande de la dynamo monté, à intervalle de l'axe de la roue, sur le support, caractérisée par le fait que le support est constitué par un disque de réception (2), en forme d'assiette, installé sur l'axe de la roue (1) assurant le montage pivotant du pignon de commande (8) avec l'organe de couplage (10), et par un boitier (11) y faisant suite, disposé transversalement par rapport à l'axe de la roue (1), dans lequel la dynamo (3) est logée , et que l'entraînement en boucle (5/6), formé d'au moins une courroie crantée, passe par le disque de réception (2) et le boîtier (11).

**2.** Installation d'éclairage selon revendication 1, caractérisée par le fait qu'un plateau à toc (4) est monté, pivotant autour du disque de réception (2) en forme d'assiette, par l'intermédiaire d'un roulement à billes (7), plateau à toc (4) sur lequel sont installés le pignon de commande (8) de l'entraînement en boucle (5/6), étant fixé immobile, et l'organe de couplage (10), adaptable par adhérence aux rayons de roue (9) et formé par un levier de mise en marche et d'arrêt.

**3.** Installation d'éclairage selon revendications 1 et 2, caractérisée par le fait que le bord d'assiette .(2a) du disque de réception (2), le plateau à toc (4) et l'organe de couplage (10) sont disposés parallèlement par rapport à l'oblicité des rayons de roue (9).

**4.** Installation d'éclairage selon revendications 1 à 3, caractérisée par le fait que l'entraînement en bouche (5) à une transmission simple et possède une courroie crantée (14) tournant autour du pignon de commande (8) ainsi que d'un pignon d'attaque (18) de la dynamo (3) (fig. 1 et 2).

**5.** Installation d'éclairage selon revendications 1 à 3, caractérisée par le fait que l'entraînement en boucle (6) a une transmission double et possède deux courroie crantée (14, 21) et un pignon intermédiaire (20) à deux étages, monté, pivotant autour d'un axe (19), dans le boîtier (11), la première courroie crantée (14) tournant sur la roue de commande (8) et le premier étage du pignon intermédiaire (20), tandis que la seconde courroie crantée (21) tourne sur le second étage du pignon intermédiaire (20) et un pignon d'attaque (18) de la dynamo (3) (fig. 3 et 4).

**6.** Installation d'éclairage selon revendications 1 à 5, caractérisée par le fait qu'un anneau (12), formant une partie du boîtier (11) et un anneau de fixation (13) sont fixés autour du bord d'assiette (2a) du disque de réception (2) et accueillent, dans leur cavité, le roulement à billes (7), la roue de commande (8) et une partie de la courroie crantée (14).

**7.** Installation d'éclairage selon revendications 1 à 6, caractérisée par le fait que le boîtier (11) est pourvu d'un couvercle de fermeture (11a) et d'une pièce de raccordement de câble (15).

**8.** Installation d'éclairage selon revendications 1 à 7, caractérisée par le fait que l'organe de couplage (10) est constitué par un levier à crans élastique, mobile en deux positions finales sur le plateau à toc (4), autour d'un axe (22) disposé transversalement par rapport à l'axe de la roue (1).

**9.** Installation d'éclairage selon revendications 1 à 8, caractérisée par le fait que l'entraxe entre l'axe de la roue (1) ou du pignon de commande (8) et le pignon d'attaque (18) de la dynamo (3) est d'une taille telle que le rail de retenue inférieur de la tôle de protection n'a pas besoin d'être courbé ou prolongé et que les vis de fixation du rail de retenue de la tôle de protection ont place dans les découpes (2b) du disque de réception (2).

**10.** Installation d'éclairage selon revendications 1 à 9, caractérisée par le fait que celle-ci est conçue sous forme d'une unité modulaire en pièces métalliques ou en matière plastique, cette unité modulaire étant plate, allongée, aérodynamique et pouvant être fixée, à gauche et à droite, sur l' l'axe de la roue (1).

**11.** Installation d'éclairage selon revendications 1 à 10, caractérisée par le fait qu'un compteur kilométrique numérique et/ou un accumulateur de courant rechargeable peuvent être intégrés dans le boîtier (11).

Fig. 1

Fig. 3

EP 0 296 306 B1

EP 0 296 306 B1

Fig. 2

I÷I

Fig. 4

II÷II